# EUROPEAN PATENT APPLICATION

(11) **EP 4 109 953 A1**
(43) Date of publication of application: **28.12.2022**
(21) Application number: 20920463.5
(22) Date of filing: 21.02.2020
(51) Int. Cl.: H04W 16/28, H04W 24/10, H04W 72/04

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); GUO, Shaozhen, Beijing 100190 (CN); SUN, Weiqi, Beijing 100190 (CN); HOU, Xiaolin, Beijing 100190 (CN)
(74) Representative: Hoffmann Eitle
(86) International application number: PCT/JP2020/007209
(87) International publication number: WO 2021/166244

(57) **Abstract**

A terminal according to an aspect of the present disclosure includes: a transmitting section that transmits a channel state information (CSI) report including CSI for each group; and a control section that determines whether or not resources in a group can be simultaneously received. According to an aspect of the present disclosure, a CSI report related to group-based beam reporting can be suitably used.

## Description

### Technical Field

The present disclosure relates to a terminal, a radio communication method, and a base station in next-generation mobile communication systems.

### Background Art

In the universal mobile telecommunications system (UMTS) network, the specifications of long term evolution (LTE) have been drafted for the purpose of further increasing high speed data rates, providing lower delays, and so on (see Non Patent Literature 1). In addition, the specifications of LTE-Advanced (third generation partnership project (3GPP) Release (Rel) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), 6th generation mobile communication system (6G), New Radio (NR), or 3GPP Rel. 15 or later) are also being studied.

### Citation List

### Non Patent Literature

Non Patent Literature 1:3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In Rel. 15 and 16 NR, a UE in which group-based beam reporting is enabled can report only two different beam indices for each report setting. Therefore, for Rel. 17, it has been studied to cause the number of groups that can be reported by the group-based beam reporting to be larger than 2.

However, a method for properly determining which beam indices the UE can receive at the same time has not yet been studied. If this is not clarified, for example, a base station may simultaneously transmit beams that cannot be simultaneously received by the UE, and the communication throughput may be lowered.

Therefore, an object of the present disclosure is to provide a terminal, a radio communication method, and a base station that can suitably use a CSI report related to group-based beam reporting.

### Solution to Problem

A terminal according to an aspect of the present disclosure includes: a transmitting section that transmits a channel state information (CSI) report including CSI for each group; and a control section that determines whether or not resources in a group can be simultaneously received.

### Advantageous Effects of Invention

According to an aspect of the present disclosure, a CSI report for an SINR related to group-based beam reporting can be suitably used.

### Brief Description of Drawings

Figs. 1A and 1B are diagrams illustrating an example of RRC information elements regarding CSI report configuration and CSI resource configuration.
Figs. 2A and 2B are diagrams illustrating an example of RRC information elements regarding an NZP CSI-RS resource set and a CSI-SSB resource set.
Fig. 3 is a diagram illustrating an example of RRC information elements regarding a TCI state.
Fig. 4 is an excerpt of an RRC information element "CSI-ReportConfig".
Fig. 5 is a diagram illustrating an example of a CSI report in Rel. 15 NR.
Figs. 6A and 6B are diagrams illustrating an example of a CSI report for multiple group-based beam reporting according to a first embodiment.
Figs. 7A and 7B are diagrams illustrating an example of a beam usage environment assumed for multiple group-based beam reporting.
Fig. 8 is a diagram illustrating an example of a CSI report of Embodiment 2-1.
Figs. 9A and 9B are diagrams illustrating another example of a CSI report of Embodiment 2-1.
Fig. 10 is a diagram illustrating an example of a CSI report of Embodiment 2-2.
Figs. 11A and 11B are diagrams illustrating an example of a CSI report for reporting a combined value.
Fig. 12 is a diagram illustrating an example of a schematic configuration of a radio communication system according to one embodiment.
Fig. 13 is a diagram illustrating an example of a configuration of a base station according to one embodiment.
Fig. 14 is a diagram illustrating an example of a configuration of a user terminal according to one embodiment.
Fig. 15 is a diagram illustrating an example of a hardware configuration of a base station and a user terminal according to one embodiment.

### Description of Embodiments

### (CSI)

In NR, a UE measures a channel state by using a reference signal (or a resource for the reference signal) and feeds back (reports) channel state information (CSI) to a network (for example, a base station).

The UE may measure the channel state using at least one of a channel state information reference signal (CSI-RS), a synchronization signal/physical broadcast channel (SS/PBCH) block, a synchronization signal (SS), a demodulation reference signal (DMRS), and the like.

A CSI-RS resource may include at least one of a Non Zero Power (NZP) CSI-RS resource, a Zero Power (ZP) CSI-RS resource, and a CSI Interference Measurement (CSI-IM) resource.

A resource for measuring a signal component for CSI may be referred to as a signal measurement resource (SMR) or a channel measurement resource (CMR). The SMR (CMR) may include, for example, an NZP CSI-RS resource for channel measurement, an SSB, and the like.

A resource for measuring an interference component for CSI may be referred to as an Interference Measurement Resource (IMR). The IMR may include, for example, at least one of the NZP CSI-RS resource for interference measurement, an SSB, a ZP CSI-RS resource, and a CSI-IM resource.

The SS/PBCH block is a block including a synchronization signal (e.g., primary synchronization signal (PSS) and secondary synchronization signal (SSS)) and a PBCH (and the corresponding DMRS), which may be called an SS block (SSB) or the like.

Note that, the CSI may include at least one of a Channel Quality Indicator (CQI), a Precoding Matrix Indicator (PMI), a CSI-RS Resource Indicator (CRI), an SS/PBCH Block Resource Indicator (SSBRI), a Layer Indicator (LI), a Rank Indicator (RI), Layer 1 Reference Signal Received Power (L1-RSRP), L1-Reference Signal Received Quality (RSRQ), an L1-Signal to Interference Plus Noise Ratio (SINR), an L1-Signal to Noise Ratio (SNR), and the like.

The CSI may include a plurality of parts. A CSI part 1 may include information with a relatively small number of bits (for example, the RI). A CSI part 2 may include information with a relatively large number of bits (for example, the CQI) such as information determined on the basis of the CSI part 1.

Furthermore, the CSI may also be classified into several CSI types. The type and size of information to be reported may be different depending on the CSI type. For example, a CSI type configured for performing communication using a single beam (also referred to as type 1 (type I) CSI, CSI for a single beam, or the like), and a CSI type configured for performing communication using multiple beams (also referred to as type 2 (type II) CSI, CSI for multiple beams, or the like) may be specified. The usage of the CSI type is not limited to those.

As a method for feeding back the CSI, periodic CSI (P-CSI) reporting, aperiodic CSI (A-CSI) reporting, semi-persistent CSI (SP-CSI) reporting and the like are under study.

The UE may be notified of CSI measurement configuration information using higher layer signaling, physical layer signaling, or a combination thereof.

In the present disclosure, the higher layer signaling may be any of, for example, radio resource control (RRC) signaling, medium access control (MAC) signaling, broadcast information, and the like, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), other system information (OSI), or the like.

The physical layer signaling may be, for example, downlink control information (DCI).

The CSI measurement configuration information may be configured using, for example, the RRC information element "CSI-MeasConfig". The CSI measurement configuration information may include CSI resource configuration information (RRC information element "CSI-ResourceConfig"), CSI report configuration information (RRC information element "CSI-ReportConfig"), and the like. The CSI resource configuration information is related to a resource for CSI measurement, and the CSI reporting configuration information is related to how the UE performs CSI reporting.

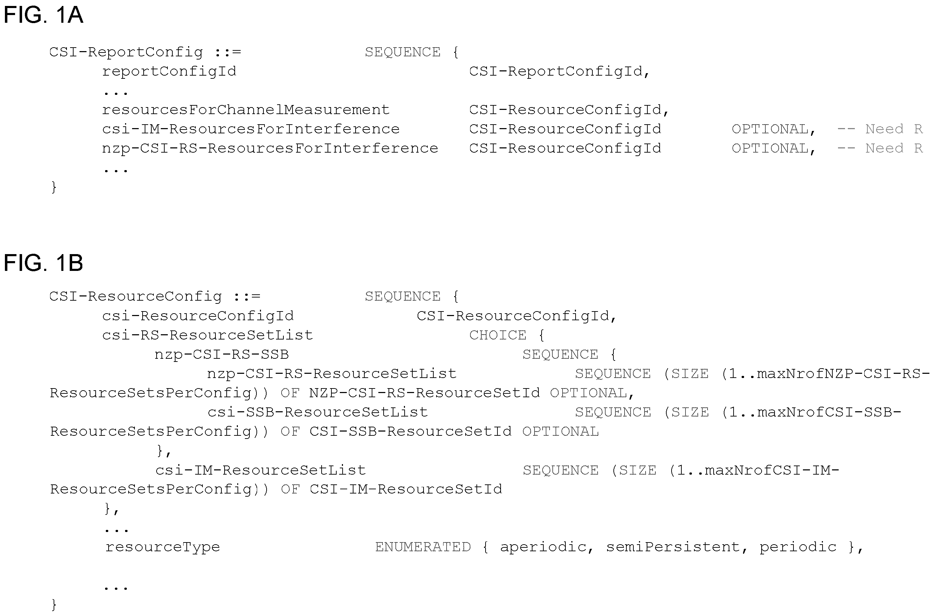

Figs. 1A and 1B are diagrams illustrating an example of RRC information elements regarding CSI report configuration and CSI resource configuration. In this example, an excerpt of a field (which may be referred to as a parameter) included in an information element is illustrated. Figs. 1A and 1B are described using Abstract Syntax Notation One (ASN.1) notation. Note that, drawings relating to other RRC information elements (or RRC parameters) of the present disclosure are also described in the similar notation.

As illustrated in Fig. 1A, the CSI report configuration information ("CSI-ReportConfig") includes resource information for channel measurement ("resourcesForChannelMeasurement"). Furthermore, the CSI report configuration information may include resource information for interference measurement i (for example, NZP CSI-RS resource information for interference measurement ("nzp-CSI-RS-ResourcesForInterference"), CSI-IM resource information for interference measurement ("csi-IM-ResourcesForInterference"), and the like. These pieces of resource information correspond to CSI resource configuration information IDs (Identifiers) ("CSI-ResourceConfigId") .

Note that, the CSI resource configuration information IDs (which may be referred to as CSI resource configuration IDs) corresponding to respective pieces of resource information may have the same value in one or more IDs or may respectively have different values.

As illustrated in Fig. 1B, the CSI resource configuration information ("CSI-ResourceConfig") may include a CSI resource configuration information ID, CSI-RS resource set list information ("csi-RS-ResourceSetList"), a resource type ("resourceType"), and the like. The CSI-RS resource set list may include at least one of NZP CSI-RS and SSB information ("nzp-CSI-RS-SSB") for measurement and CSI-IM resource set list information ("csi-IM-ResourceSetList") .

The resource type represents a behavior of a time domain of the CSI-RS resource configuration, and "aperiodic", "semi-persistent", and "periodic" can be configured. Corresponding CSI-RSs may be referred to as an A-CSI-RS, an SP-CSI-RS, and a P-CSI-RS.

Note that, a resource for channel measurement may be used for calculation of, for example, the CQI, PMI, L1-RSRP, and the like. Furthermore, a resource for interference measurement may be used for calculation of the L1-SINR, L1-SNR, L1-RSRQ, and other indicators regarding interference.

When the interference measurement is performed with CSI-IM, each CSI-RS for channel measurement may be associated with the CSI-IM resource in terms of resources, on the basis of the order of the CSI-RS resource and the CSI-IM resource in the corresponding resource set.

The "nzp-CSI-RS-SSB" may include NZP CSI-RS resource set list information ("nzp-CSI-RS-ResourceSetList") and SSB resource set list information for CSI measurement ("csi-SSB-ResourceSetList"). These pieces of list information correspond to one or more NZP CSI-RS resource set IDs ("NZP-CSI-RS-ResourceSetId") and CSI-SSB resource set IDs ("CSI-SSB-ResourceSetId"), and may be used for specifying a resource as a measurement target.

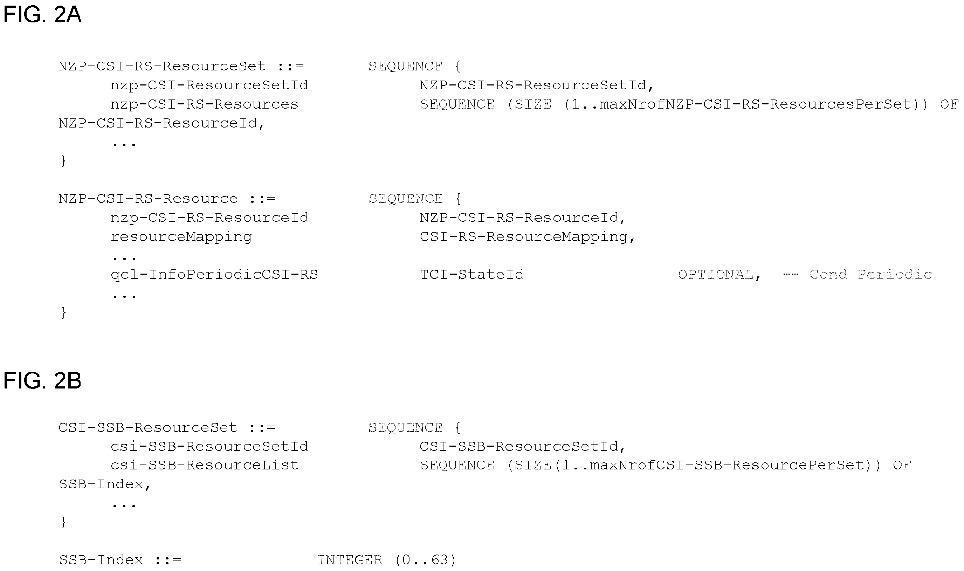

Figs. 2A and 2B are diagrams illustrating an example of RRC information elements regarding an NZP CSI-RS resource set and a CSI-SSB resource set.

As illustrated in Fig. 2A, the NZP CSI-RS resource set information ("NZP-CSI-RS-ResourceSet") includes the NZP CSI-RS resource set ID and one or more NZP CSI-RS resource IDs ("NZP-CSI-RS-ResourceId").

NZP CSI-RS resource information ("NZP-CSI-RS-Resource") may include the NZP CSI-RS resource ID and an ID ("TCI-stateId") of a Transmission Configuration Indication state. The TCI state will be described later.

As illustrated in Fig. 2B, CSI-SSB resource set information ("CSI-SSB-ResourceSet") includes the CSI-SSB resource set ID and one or more pieces of SSB index information ("SSB-Index"). The SSB index information is, for example, an integer of 0 or more and 63 or less, and may be used for identifying the SSB in an SS burst.

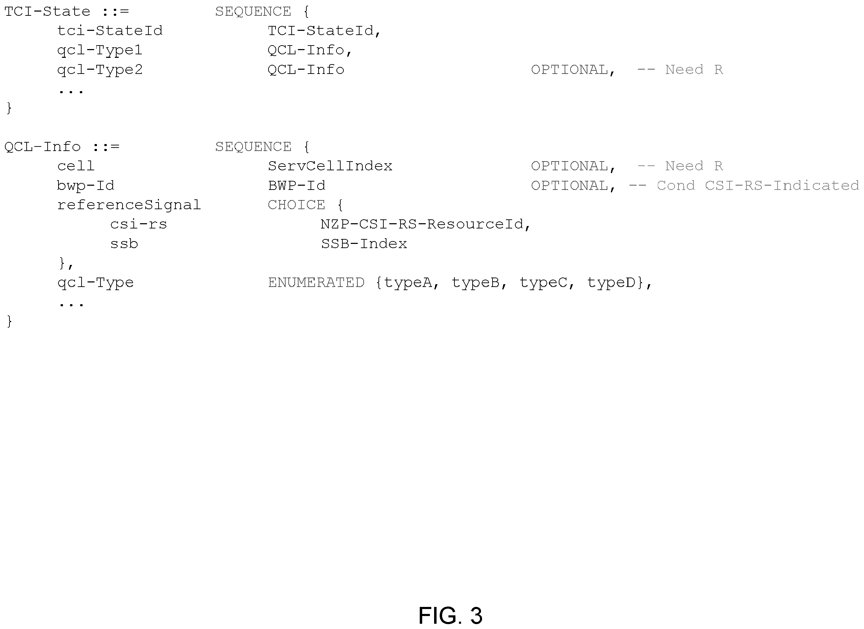

Fig. 3 is a diagram illustrating an example of an RRC information element regarding a TCI state.

The TCI state is information regarding quasi-co-location (QCL) of a channel or a signal, and may also be referred to as a spatial reception parameter, spatial relation info, or the like. The TCI state may be configured or specified for the UE per channel or per signal.

As illustrated in Fig. 3, the TCI state information ("TCI-State") may include a TCI state ID and one or more pieces of QCL information ("QCL-Info"). The QCL information may include at least one of information regarding a reference signal of a QCL source (RS-related information ("referenceSignal")) and information indicating a QCL type (QCL type information ("qcl-Type")). The RS-related information may include information such as an index of an RS (for example, NZP CSI-RS resource ID, SSB index), an index of a serving cell, and an index of a bandwidth part (BWP) in which the RS is located.

The UE may control reception processing (for example, at least one of reception, demapping, demodulation, decoding, received beam determining, and the like), transmission processing (for example, at least one of transmission, mapping, modulation, encoding, Tx beam determination, and the like), and the like, on the basis of the TCI state corresponding to the TCI state ID associated with at least one of the signal and the channel (expressed as signal/channel).

Note that in the present disclosure, "A/B" may indicate "at least one of A and B".

As illustrated in Fig 2A, for a P-CSI-RS, an associated TCI state may be configured by RRC. Note that for the P-CSI-RS, the SP-CSI-RS, and the A-CSI-RS, the related TCI state may be determined on the basis of higher layer signaling, physical layer signaling, or a combination thereof.

### (Beam Management)

In Rel. 15 NR, a beam management (BM) method has been studied. In the beam management, it has been studied to perform beam selection on the basis of the L1-RSRP reported by the UE. Changing (switching) a beam of a signal/channel may be equivalent to changing at least one of a TCI state and a QCL assumption of the signal/channel.

The UE may report (transmit) a measurement result for beam management using a physical uplink control channel (PUCCH) or a physical uplink shared channel (PUSCH). The measurement result may be, for example, CSI including at least one of the L1-RSRP, L1-RSRQ, L1-SINR, L1-SNR, and the like.

A measurement result (for example, CSI) reported for beam management may be referred to as a beam measurement, a beam measurement report, a beam report, a beam report CSI, or the like.

The CSI measurement for the beam report may include interference measurement. The UE may measure channel quality, interference, and the like using a resource for CSI measurement, and derive the beam report.

The beam report may include a result of at least one of channel quality measurement and interference measurement. The result of the channel quality measurement may include, for example, the L1-RSRP. The result of the interference measurement may include the L1-SINR, L1-SNR, L1-RSRQ, and other indicators regarding interference (for example, any indicator other than the L1-RSRP).

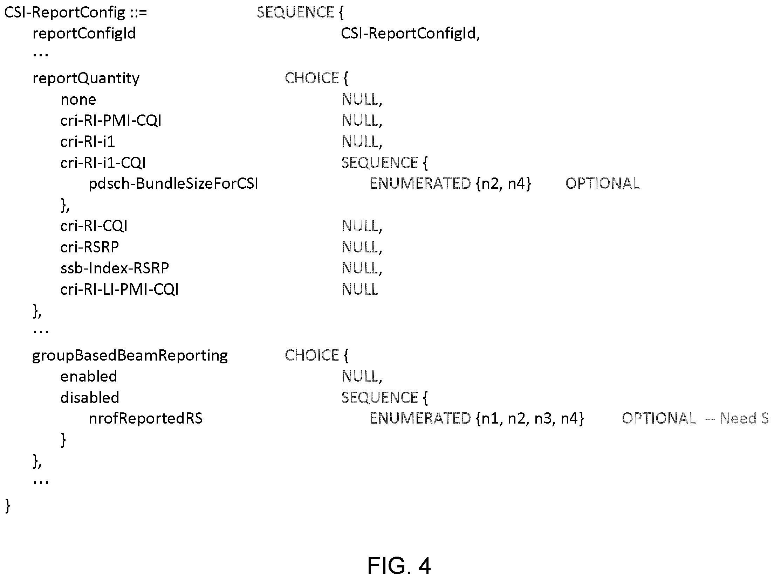

CSI report configuration information considering current NR beam management will be described with reference to Fig. 4. Fig. 4 is an excerpt of the RRC information element "CSI-ReportConfig". Fig. 4 is an excerpt of another part of the same CSI report configuration information (CSI-ReportConfig) as that in Fig. 1A.

The CSI report configuration information may include a "report quantity" (which may be represented by an RRC parameter "reportQuantity") that is information of a parameter to be reported in one report instance (for example, one CSI). The report quantity is defined by the type of the ASN.1 object "choice". Therefore, one of the parameters (cri-RSRP, ssb-Index-RSRP, and the like) defined as the report quantity is set.

The UE in which the higher layer parameter (for example, the RRC parameter "groupBasedBeamReporting" for group-based beam reporting) included in the CSI report configuration information is disabled may include, for each report setting, beam measurement resource IDs (for example, SSBRI, CRI) having different numbers of higher layer parameters (for example, the RRC parameter "nrofReportedRS" indicating the number of reported RSs) included in the CSI report configuration information and measurement results (for example, L1-RSRP) corresponding to the respective IDs in the beam report (one report instance).

The UE in which groupBasedBeamReporting is enabled may include, for each report setting, two different beam measurement resource IDs and two measurement results (for example, L1-RSRP) corresponding to the respective IDs in the beam report. In other words, the UE with groupBasedBeamReporting enabled divides the DL-RS (for example, CSI-RS) into two groups and reports the ID and the measurement value for the higher RS in each group. Note that the two beam measurement resources (CSI-RS resource, SSB resource) may be simultaneously received by the UE by using one spatial domain reception filter or may be simultaneously received by the UE by using a plurality of simultaneous spatial domain reception filters.

In Rel. 15 NR, cri-RSRP and ssb-Index-RSRP of the report quantities are related to beam management. The UE in which the cri-RSRP is set as the report quantity reports the CRI and the L1-RSRP corresponding to the CRI. The UE in which the ssb-Index-RSRP is set as the report quantity reports the SSBRI and the L1-RSRP corresponding to the CRI.

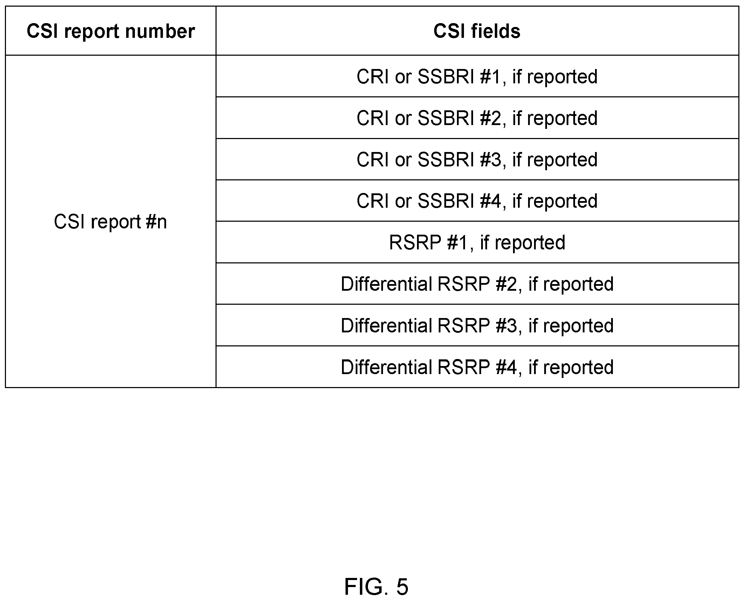

Fig. 5 is a diagram illustrating an example of a CSI report in Rel. 15 NR. Mapping order of a CSI field included in one CSI report (n-th CSI report #n) for CSI/RSRP or SSBRI/RSRP reporting, which is defined in Table 6.3.1.1.2-8 of 3GPP TS 38.212 V15.7.0 is illustrated.

The CSI report of Fig 5 may include one or more sets of CRI/SSBRI and RSRP. The number of these sets may be set by a higher layer parameter (for example, the RRC parameter "nrofReportedRS") indicating the number of reference signal resources to be reported.

For L1-RSRP reporting, when nrofReportedRS is set to 1 (a value is 'n1'), RSRP #1, which is a field of a predetermined number of bits (for example, m bits) indicating L1-RSRP of the largest measurement value, is included in the CSI report. In Rel. 15 NR, m = 7 is satisfied.

For L1-RSRP reporting, when nrofReportedRS is set to be greater than 1, or groupBasedBeamReporting is enabled, the UE uses differential L1-RSRP-based reporting. Specifically, the UE includes, in the same CSI report (reporting instance), RSRP #1 indicating the L1-RSRP having the largest measurement value and a differential RSRP #k calculated (for example, as a difference from the measurement value,) with reference to the largest measurement value for the L1-RSRP having the k-th largest (in Fig. 5, k = 2, 3, and 4) measurement value. Here, the differential RSRP #k may be a field of bits with the number (for example, n bits) smaller than the predetermined number. In Rel. 15 NR, n = 4 is satisfied.

Note that when groupBasedBeamReporting is enabled, the UE includes the RSRP #1 and the differential RSRP #2 in the same CSI report.

The CRI/SSBRI #k in Fig. 5 is a field indicating the CRI/SSBRI corresponding to the RSRP #k or the differential RSRP #k (included in a case where the RSRP #k or the differential RSRP #k is reported).

Note that in NR after Rel. 16, nrofReportedRS may be a value of 4 or more, or may be 4 or more. The CSI report may include four or more sets of CRI/SSBRI and RSRP. The above m and n are not limited to 7 and 4, respectively.

Incidentally, beam management-related extensions (for example, beam reports suitable for a plurality of TRPs) of a user terminal (User Equipment (UE)) having a plurality of panels (multiple panels), a plurality of transmission/reception points (multiple transmission/reception points (TRP)), and the like have been studied for a future radio communication system (for example, Rel. 17 NR).

Since the above-described groupBasedBeamReporting can be reported in one report for two groups, it is suitable when multi-TRP transmission, multi-panel reception, or the like is applied. For example, the best beam of the TRP 1 as the RSRP #1 and the best beam of the TRP 2 as the differential RSRP #2 can be used for reporting.

In Rel. 16 NR, introduction of L1-SINR reporting is studied. With respect to the calculation of the L1-SINR, the UE may configure at least one of the NZP CSI-RS resource and the SSB resource for channel measurement and configure at least one of the NZP CSI-RS resource and the CSI-IM resource for interference measurement.

The UE in which the cri-SINR is set as the report quantity reports the CRI and the L1-SINR corresponding to the CRI. The UE in which the ssb-Index-SINR is set as the report quantity reports the SSBRI and the L1-SINR corresponding to the CRI.

The UE in which the higher layer parameter (for example, the RRC parameter "groupBasedBeamReporting" for group-based beam reporting) included in the CSI report configuration information is disabled may include, for each report setting, beam measurement resource IDs (for example, SSBRI, CRI) having different numbers of higher layer parameters (for example, the RRC parameter "nrofReportedRSForSINR" indicating the number of RSs reported for the SINR) included in the CSI report configuration information and measurement results (for example, L1-SINR) corresponding to the respective IDs in the beam report (one or more report instances).

The UE in which groupBasedBeamReporting is enabled may include, for each report setting, two different beam measurement resource IDs and two measurement results (for example, L1-SINR) corresponding to the respective IDs in the beam report. Note that the two beam measurement resources (CSI-RS resource, SSB resource) may be simultaneously received by the UE by using one spatial domain reception filter or may be simultaneously received by the UE by using a plurality of simultaneous spatial domain reception filters.

Note that groupBasedBeamReporting for SINR reporting may be replaced with a parameter such as "groupBasedBeamReportingForSINR".

For the L1-SINR reporting, when nrofReportedRSForSINR is set to 1 (a value is 'n1'), SINR #1, which is a 7-bit field indicating the L1-SINR of the largest measurement value, is included in the CSI report.

For the L1-SINR reporting, when the nrofReportedRSForSINR is set to be greater than 1, the UE uses differential L1-SINR-based reporting. Specifically, the UE includes the SINR #1 indicating the L1-SINR of the largest measurement value and the differential SINR #k calculated (for example, as a difference from the measurement value) with reference to the largest measurement value for the k-th (k = 2, 3, 4) large L1-SINR in the same CSI report (reporting instance). Here, the differential SINR #k may be a 4-bit field.

Note that the SINR #1 may correspond to a value quantized to 7 bits with a step size of 0.5 dB in a range of -23 dB or more and 40 dB or less. The differential SINR #k may correspond to a value quantized to 4 bits with a step size of 1 dB. Note that the range, step size, and the like of each value are not limited thereto.

As described above, in Rel. 15 and 16, the UE in which group-based beam reporting is enabled can report only two different CRI/SSBRI (which may be replaced with beam indices) for each report setting. Therefore, for Rel. 17, it has been studied to cause the number of groups that can be reported by the group-based beam reporting to be larger than 2.

However, a method for properly determining which beam indices the UE can receive at the same time has not yet been studied. If this is not clarified, for example, a base station may simultaneously transmit beams that cannot be simultaneously received by the UE, and the communication throughput may be lowered.

Therefore, the present inventors have conceived a suitable CSI report configuration for group-based beam reporting in consideration of setting the number of beam indices in a group to two or more. In addition, the inventors have conceived a method for appropriately determining beams that can be simultaneously received by the UE, beams that are simultaneously transmitted by the base station, and the like.

Hereinafter, embodiments according to the present disclosure will be described in detail with reference to the drawings. The radio communication methods according to the embodiments may be applied alone or in combination.

Note that, in the present disclosure, a panel, an uplink (UL) transmission entity, a TRP, a spatial relation, a control resource set (CORESET), a PDSCH, a codeword, a base station, an antenna port (e.g., demodulation reference signal (DMRS) port), an antenna port group (e.g., DMRS port group), a group (e.g., code division multiplexing (CDM) group, reference signal group, CORESET group, and CORESET pool), and the like may be replaced with each other. For example, the panel identifier (ID) and the panel may be replaced with each other. The TRP ID and the TRP may be replaced with each other.

Note that in the present disclosure, the group may be replaced with a group related to a set, a cluster, a panel, and a beam (to be reported) or the like.

In the following embodiments, the beam index may be replaced with, for example, CRI/SSBRI. In addition, the RSRP/SINR may be replaced with an arbitrary beam-related measurement result.

### (Radio Communication Method)

### <First Embodiment>

A UE in which group-based beam reporting (groupBasedBeamReporting) is enabled may report beam indices for a plurality of (for example, M) groups for each report setting. The CSI report may include a plurality of (for example, N) beam indices for each of the M groups. The CSI report may explicitly or implicitly include a group index indicating a group to be reported.

Here, M and N may be defined in advance by a specification, may be determined on the basis of UE capability (or reported UE capability information), or may be set by higher layer signaling or the like.

For example, M may be set by a higher layer parameter (for example, nrofReportedGroup) related to the number of groups to be reported. In addition, N may be set by a higher layer parameter (for example, nrofReportedRS) related to the number of RSs to be reported.

M and N may be determined on the basis of the number of panels included in the UE, or may be determined on the basis of the number of TRPs to be transmitted to the UE (the set number of TRPs).

The above M may mean the number of groups to be reported, or may mean the maximum number of groups that can be reported. The above N may mean the number of beam indices to be reported in the group, or may mean the maximum number of beam indices that can be reported in the group. M may be 2 or more. N may be 2 or more. Note that N may be different for each group, and corresponding N may be set or determined for each group.

Note that the group-based beam reporting of the first embodiment may be referred to as multiple group-based beam reporting, multiple group-based beam reporting, group-based beam reporting of Rel. 17, or the like. The multiple group-based beam reporting may be performed when a higher layer parameter (for example, groupBasedBeamReporting) indicating the group-based beam reporting, a higher layer parameter (for example, groupBasedBeamReporting-r 17) indicating the group-based beam reporting of Rel. 17, or a higher layer parameter (for example, multipleGroupBasedBeamReporting) indicating the multiple group-based beam reporting is enabled.

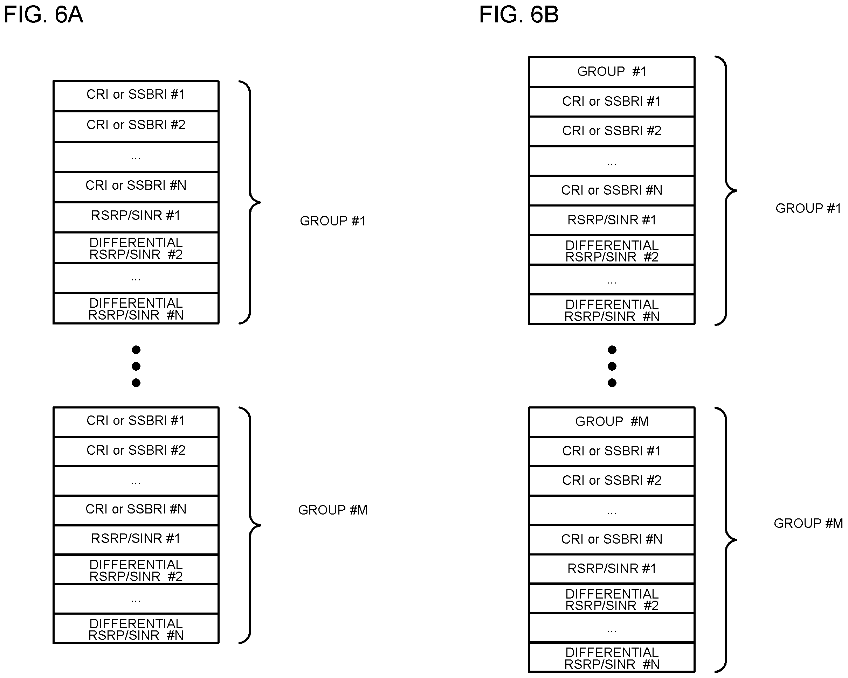

The UE in which the multiple group-based beam reporting is set may create a CSI report as illustrated in Figs 6A, 6B, and the like and transmit the CSI report to the network.

Figs. 6A and 6B are diagrams illustrating an example of a CSI report for multiple group-based beam reporting according to the first embodiment. In this example, the fields included in the CSI report are illustrated, but the arrangement order is not limited thereto.

Fig. 6A illustrates a CSI report in which a group index is implicitly included. The CSI report includes a set of fields for each group in the order of the groups #1 to #M. The set of fields for each group includes N beam indices in the group and N RSRP/SINRs and differential RSRP/SINRs corresponding to each beam index. The UE and the base station can determine to which group the field in the CSI report corresponds on the basis of the position of the field.

Note that in the present disclosure, the set of fields in units of groups included in the CSI report may be referred to as a report in units of groups, a group report, or the like.

Fig. 6B illustrates a CSI report in which a group index is explicitly included. The difference from Fig. 6A is that a group index field indicating an index of the group is included immediately before the group report. Note that the position of the group index field is not limited thereto.

In this example, the group reports are included in the order of the groups #1 to #M, but the group index field allows the group reports to be included in the CSI report in any order. For example, even when the UE reports the CSI report that includes group reports for fewer than M groups (for example, groups selected from M groups), the base station can properly understand the reported groups.

Note that the group report may include only the differential RSRP/SINR as a measurement result. The differential RSRP/SINR included in the group report of one group may be calculated with reference to the SINR #1 of another group. In addition, the group report may include only the RSRP/SINR as a measurement result.

Hereinafter, the RSRP/SINR included in the group report in the present disclosure may be replaced with normal (not different from others) RSRP/SINR or may be replaced with differential RSRP/SINR.

Hereinafter, CRI is used as an example of the beam index included in the group report for description, but CRI in the present disclosure may be replaced with CRI or SSBRI.

According to the first embodiment described above, the UE can suitably create and report the CSI report for the group-based beam reporting for a plurality of groups.

### <Second Embodiment>

A second embodiment relates to the multiple group-based beam reporting described in the first embodiment.

The second embodiment is roughly divided into the following two:
- Embodiment 2-1: The UE can simultaneously receive a plurality of beams that belong to different groups.
- Embodiment 2-2: The UE can simultaneously receive a plurality of beams that belong to the same group.

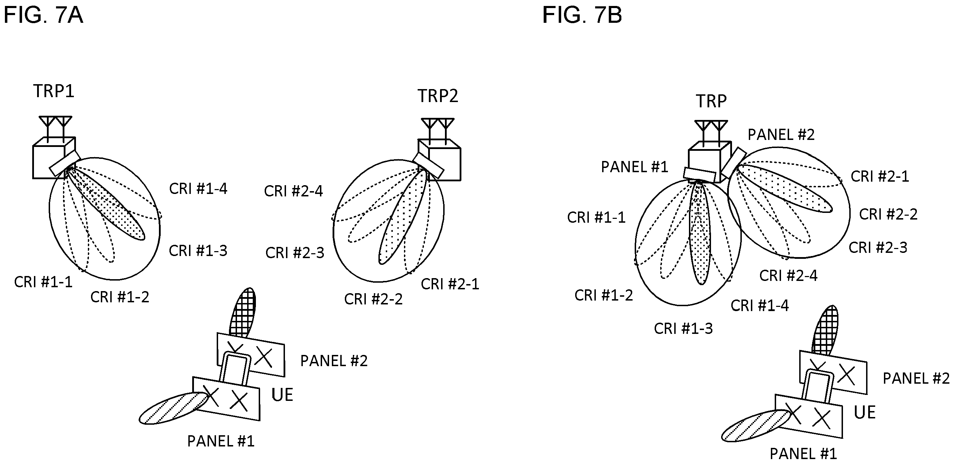

Hereinafter, the second embodiment will be described using the environment of Figs. 7A and 7B as an example. Figs. 7A and 7B are diagrams illustrating an example of a beam usage environment assumed for multiple group-based beam reporting.

In Fig. 7A, the UE measures resources of reference signals (CSI-RS) transmitted from two TRPs (TRPs #1 and #2). The UE has two panels (panels #1 and #2), and each panel can form a different beam.

TRP #1 transmits the CSI-RS using resources of CRI #1-1 to CRI #1-4 corresponding to different beams, respectively. TRP #2 transmits the CSI-RS using the resources of CRI #2-1 to CRI #2-4 corresponding to different beams, respectively.

In Fig. 7B, the UE measures a resource of a reference signal (CSI-RS) transmitted from one TRP. The UE in Fig. 7B may have a configuration similar to that of the UE in Fig. 7A.

The TRP has two panels (panels #1 and #2), and each panel can form a different beam. The TRP transmits CSI-RSs from the panel #1 using the resources of CRI #1-1 to CRI #1-4 corresponding to different beams, respectively. The TRP transmits CSI-RSs from the panel #2 using the resources of CRI #2-1 to CRI #2-4 corresponding to different beams, respectively.

Embodiments 2-1 and 2-2 will be described below with specific examples of CSI reports for the multiple group-based beam reporting described above using Figs. 6A and 6B. The RSRP/SINRs corresponding to CRI #1-1 to CRI #1-4 may be denoted as RSRP/SINR #1-1 to RSRP/SINR #1-4, respectively. The RSRP/SINRs corresponding to CRI #2-1 to CRI #2-4 may be denoted as RSRP/SINR #2-1 to RSRP/SINR #2-4, respectively.

### [Embodiment 2-1]

In Embodiment 2-1, for the reporting beam indices within a group, the UE may not have to expect to receive these beams at the same time (or may assume that these beams cannot be received at the same time) (on the basis of the corresponding TCI state).

Note that in the present disclosure, simultaneously receiving the respective beams related to the plurality of beam indices may mean simultaneously receiving the beam measurement resources (CSI-RS resource and SSB resource) corresponding to the beam indices by using one or a plurality of spatial domain reception filters.

The group reports in Embodiment 2-1 may be configured according to rules similar to those when the group-based beam reporting is disabled in Rel. 15/16. For example, the group report may include the beam index of the number of nrofReportedRSs and the corresponding RSRP/SINR.

In Embodiment 2-1, for reporting beam indices for different groups, the UE can receive these beams simultaneously (on the basis of the corresponding TCI state).

For example, the UE may perform measurements using different panels/antennas/transceiver units (TXRU) (or panels/antennas/TXRU groups). A beam index in a group may mean a beam measured by the same panel/antenna/TXRU. In this case, the group is synonymous with the panel/antenna/TXRU.

For multi-TRP transmission, the network may select a plurality of beams from different groups of beams to transmit beams that ensure that the UE can receive the beams at the same time.

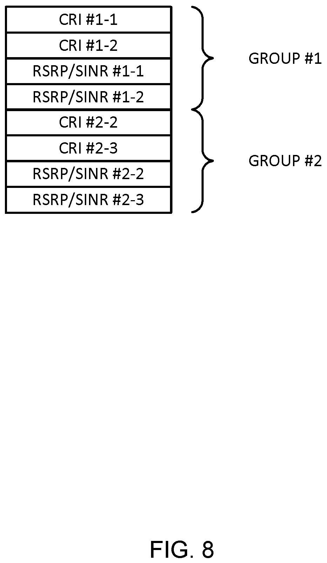

Fig. 8 is a diagram illustrating an example of a CSI report of Embodiment 2-1. In this example, it is assumed that M and N described in the first embodiment are 2. The UE has reported the CSI report of Fig. 7B to the network (for example, the base station) when the best CRI for the group #1 is CRI #1-1, the second best CRI for the group #1 is CRI #1-2, the best CRI for the group #2 is CRI #2-2, and the second best CRI for the group #2 is CRI #2-3.

The base station that has received the CSI report may select CRI #1-1 from the group #1 and CRI #2-2 from the group #2, for multi-TRP/multi-panel transmission.

The group may correspond to the base station or the panel of the base station, and in this case, the base station can grasp a best beam of one panel of the UE on a one-to-one basis through one group report. In the CSI report of Fig. 8, the group corresponds to the base station or the panel of the base station, and the CSI report is appropriate to be used in the environment of Fig. 7A, for example. Note that the CSI report of Fig. 8 may be used in the environment of Fig. 7B.

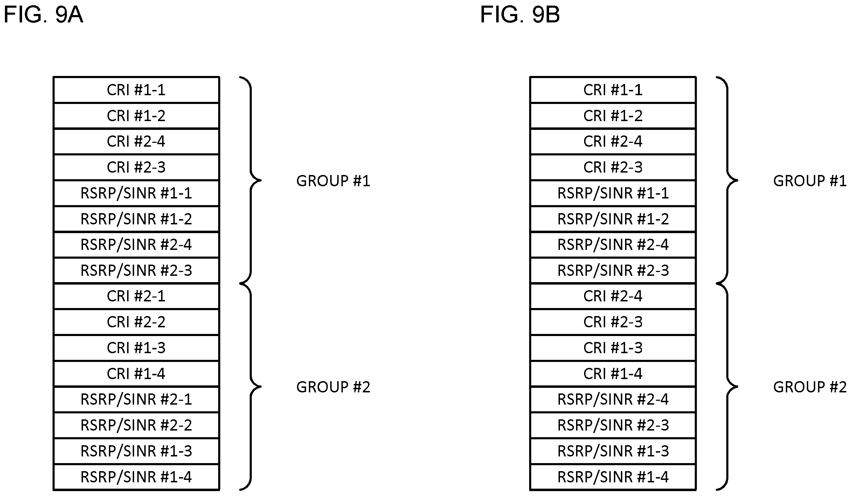

In Embodiment 2-1, the group may correspond to one TRP (or one panel) as illustrated in Fig. 8, or may correspond to a plurality of TRPs (or a plurality of panels) as illustrated in Figs. 9A and 9B.

Figs. 9A and 9B are diagrams illustrating another example of the CSI report of Embodiment 2-1. In this example, it is assumed that M and N described in the first embodiment are 2 and 4, respectively.

The CSI report in Fig. 9A shows that for the group #1, the first, second, third, and fourth best CRIs are CRI #1-1, #1-2, #2-4, and #2-3, respectively, and for the group #2, the first, second, third, and fourth best CRIs are CRI #2-1, #2-2, #1-3, and #1-4, respectively. As illustrated in Fig. 9A, for different group reports, inclusion of overlapping CRI/SSBRI may not be allowed.

In this case, the base station that has received the CSI report from the UE may grasp that beams from the same group (panel) cannot be simultaneously transmitted, and select, for example, CRI #1-1 from the group #1 and CRI #2-1 from the group #2 for multi-TRP/multi-panel (NCJT) transmission. The base station may not, for example, schedule CRI #1-1 from the group #1 and CRI #1-3 from the group #1 for NCJT transmission (because the UE cannot receive CRI #1-1 and CRI #1-3 at the same time).

The CSI report in Fig. 9B shows that for the group #1, the first, second, third, and fourth best CRIs are CRI #1-1, #1-2, #2-4, and #2-3, respectively, and for the group #2, the first, second, third, and fourth best CRIs are CRI #2-4, #2-3, #1-3, and #1-4, respectively. As illustrated in Fig. 9B, for different group reports, inclusion of overlapping CRI/SSBRI (in this example, CRI #2 -4 and #2-3) may be allowed.

In this case, the base station that has received the CSI report from the UE may grasp that beams from the same group (panel) cannot be simultaneously transmitted, and select, for example, CRI #1-1 from the group #1 and CRI #2-4 from the group #2 for multi-TRP/multi-panel (NCJT) transmission. In addition, the base station may select CRI #2-4 from the group #1 and CRI #1-3 from the group #2, for example, for multi-TRP/multi-panel (NCJT) transmission.

The group may correspond to the panel of the UE, and in this case, the base station can grasp a best beam of one panel of the UE on a one-to-one basis through one group report. The CSI report of Figs. 9A and 9B is suitable when the group corresponds to the panel of the UE, and is suitable to be used in the environment of Fig. 7B, for example. Note that the CSI report in Figs. 9A and 9B may be used in the environment of Fig. 7A.

As described above, the group report may include beam indices corresponding to only one TRP (or one panel), or may include beam indices corresponding to a plurality of TRPs (or a plurality of panels). The UE may be notified of information regarding whether or not a certain group report includes a beam index corresponding to only one TRP (or one panel) by using higher layer signaling or the like.

In Embodiment 2-1, the UE may ensure that beams of different groups are received (or can be received) simultaneously. Note that the network may or may not be able to simultaneously transmit any plurality of beams from different groups.

### [Embodiment 2-2]

In Embodiment 2-2, unlike Embodiment 2-1, regarding the reporting beam index within a group, the UE can receive these beams simultaneously (on the basis of the corresponding TCI state).

The plurality of beams corresponding to the reported beam indices in the group correspond to a combination of good beams recommended by the UE. That is, these beams have a preferable relation such as small beam interference, large spatial isolation, or a large antenna distance.

The UE with the plurality of panels may perform measurements using different panels in sequence (or alternately). A beam index in a group may mean a beam measured by the same panel/antenna/TXRU. The UE may include the measurement results of the beams measured by these different panels in the same group report or in the same CSI report. How to include the measurement results of the beams in the CSI report may be determined depending on implementation. The measurements using the different panels in sequence may be applied to one or both of L1-RSRP-based beam reporting and L1-SINR-based beam reporting.

The UE with the plurality of panels may perform measurement by using all panels simultaneously (for example, by using one TXRU group from each panel). The UE may determine a good combination of Tx beams with small beam interference on the basis of the measurement. The specific measurement behavior will be described later. The measurements using all panels simultaneously may be applied, for example, to L1-SINR-based beam reporting.

In the second embodiment, with respect to the reporting beam indices for the different groups, the UE may not have to expect to receive these beams (or may assume that these beams cannot be received at the same time) (on the basis of the corresponding TCI state).

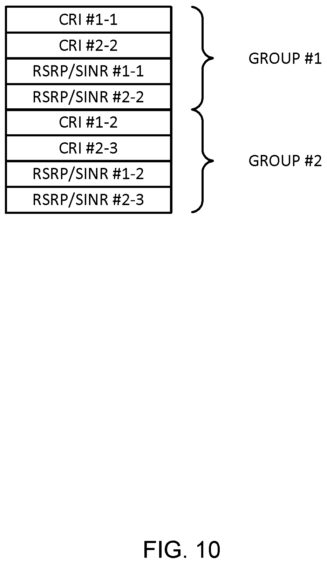

Fig. 10 is a diagram illustrating an example of a CSI report of Embodiment 2-2. In this example, it is assumed that M and N described in the first embodiment are 2. The UE has reported the CSI report of Fig. 10 to the network (for example, the base station) when the best CRI for the group #1 is CRI #1-1, the second best CRI for the group #1 is CRI #2-2, the best CRI for the group #2 is CRI #1-2, and the second best CRI for the group #2 is CRI #2-3.

The base station that has received the CSI report may select CRI #1-1 and #2-2 from the group #1, for multi-TRP/multi-panel transmission.

In Embodiment 2-2, a group may correspond to a plurality of TRPs (or a plurality of panels) as illustrated in Fig. 10. In other words, a group report may include beam indices corresponding to a plurality of TRPs (or a plurality of panels).

### [Combined Measurement]

The RSRP/SINR value reported in the group may be a beam individual value (each measurement result) or a combined value (for example, an average value) of measurement values of all beams in the group. The reporting order (or the order of arrangement in the CSI report) may be based on the combined value.

The UE may be notified of information indicating whether a report value in a certain group is an individual value or a combined value by higher layer signaling or the like. The UE may determine whether or not the report value for each group report is a combined value on the basis of the information. An information amount of the group report can be expected to be reduced by the group report including the combined value.

When a plurality of pieces of CSI resource configuration information are included in the CSI report configuration information (or a plurality of groups of resources are included in one or more pieces of CSI resource configuration information), the UE may measure reference signals of the plurality of CSI resource configurations (or the plurality of groups). In addition, the UE may determine to include a plurality of beams corresponding to different CSI resource configurations (or different groups) in one group for reporting.

For example, the UE may assume that respective resources of respective CSI resource configurations are simultaneously transmitted for a plurality of CSI resource configurations, perform simultaneous reception (simultaneous measurement) on the basis of the CSI resource configurations, and obtain a combined value of measurement results.

The UE may determine that for each CSI resource configuration, measurement is performed in sequence (or alternately) by using each panel, and beams selected from beams of different CSI resource configurations measured by different panels are included in one group for reporting.

By using such a CSI resource configuration, for example, the UE can determine beams simultaneously transmitted from the network. In addition, for example, it can be assumed that the UE can simultaneously receive a plurality of beams transmitted from the network. Note that the CSI resource configuration may include information of a corresponding group index.

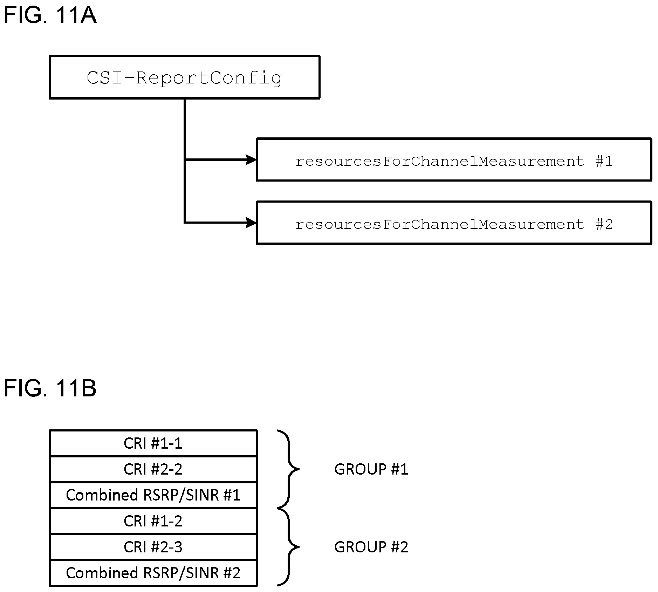

Figs. 11A and 11B are diagrams illustrating an example of a CSI report for reporting a combined value. In the present example, for example, assuming the environment of Fig. 7A, a case where CSI report configuration information (RRC information element "CSI-ReportConfig") including a plurality of resource information for channel measurement (resourcesForChannelMeasurements #1 and #2) is set to the UE as illustrated in Fig. 11A will be described. Note that a plurality of pieces of NZP CSI-RS resource information for interference measurement ("nzp-CSI-RS-ResourcesForInterference"), CSI-IM resource information for interference measurement ("csi-IM-ResourcesForInterference"), and the like may be set and used.

In this example, it is assumed that M and N described in the first embodiment are 2, and it is assumed that resourcesForChannelMeasurement #1 corresponds to the group #1, and resourcesForChannelMeasurement #2 corresponds to the group #2. resourcesForChannelMeasurements #1 and #2 may be respectively associated with CSI-RS resources of beam indices transmitted from both TRPs. For example, resourcesForChannelMeasurement #1 may include information such as CRI #1-1 and CRI #2-2.

Fig. 11B is a diagram illustrating an example of a CSI report for reporting a combined value based on Embodiment 2-2. The UE has determined that the best CRI for the group #1 is CRI #1-1, the second best CRI for the group #1 is CRI #2-2, the best CRI for the group #2 is CRI #1-2, and the second best CRI for the group #2 is CRI #2-3.

"Combined RSRP/SINR #1" in Fig. 11B indicates a combined value of the measurement values for the group #1, and may be, for example, a combined value of RSRP/SINR corresponding to CRI #1-1 and RSRP/SINR corresponding to CRI #2-2.

"Combined RSRP/SINR #2" in Fig. 11B indicates a combined value of measurement values for the group #2, and may be, for example, a combined value of RSRP/SINR corresponding to CRI #1-2 and RSRP/SINR corresponding to CRI #2-3.

The group report including the combined value may or may not include the RSRP/SINR corresponding to the individual CRI.

The base station that has received the CSI report may select CRI #1-1 and #2-2 from the group #1, for multi-TRP/multi-panel transmission.

Note that an aspect in which a plurality of pieces of CSI resource configuration information are included in the CSI report configuration information (or a plurality of groups of resources are included in one or more pieces of CSI resource configuration information) may be applied to Embodiment 2-1 described above or may be applied to Embodiment 2-2 described above. In a case of being applied to Embodiment 2-1, the UE may determine that beams of one group measured by one UE panel are transmitted from one TRP (or TRP panel).

According to the second embodiment described above, the UE can appropriately determine which group the beams belonging to can be simultaneously received with respect to the group-based beam reporting.

### <Others>

The multiple group-based beam reporting of Embodiment 2-1 (reporting a CSI report that does not assume simultaneous reception of beams of beam indices within a group) may be referred to as a mode 1 of multiple group-based beam reporting.

In addition, the multiple group-based beam reporting (reporting a CSI report that can simultaneously receive beams of beam indices in a group) in Embodiment 2-2 may be referred to as a mode 2 of multiple group-based beam reporting.

One of the above mode 1 and mode 2 may be supported by the UE, or both may be supported.

The UE may report to the network UE capability information indicating that it supports (or does not support) mode 1 multiple group-based beam reporting. The UE may report to the network UE capability information indicating that it supports (or does not support) mode 2 multiple group-based beam reporting.

The UE that has reported at least one of the UE capability information may configure, from the network, the multiple group-based beam reporting of one or both of the mode 1 and the mode 2 by higher layer signaling. The UE may perform CSI report generation, beam reception processing, and the like according to the configured multiple group-based beam reporting. Note that the multiple group-based beam reporting of at least one of the mode 1 and the mode 2 may be used without configuration by higher layer signaling.

Note that in the present disclosure, the group may correspond to a panel (or a panel index) of the UE. In this case, the UE may assume that the beams/RS of each group is measured in each panel of the UE. The UE may assume that beams of a plurality of groups are simultaneously received (using different panels).

Furthermore, in the present disclosure, the group may correspond to a TRP (or base station) panel (or panel index). In this case, the UE may assume that the beam/RS of each group is transmitted from a panel of each TRP (or base station). The UE may assume that beams of a plurality of groups can be received at the same time or cannot be received at the same time.

Here, the panel of the UE, the panel of the TRP (or the base station), and the like may be replaced with an RS group, an antenna port group, a spatial relation group, a QCL group, a TCI state group, a CORESET group, and the like.

Note that the UE may report information regarding a plurality of beams that can be simultaneously received to the network. The UE may include the information regarding the plurality of beams that can be simultaneously received in the beam report (CSI report) and transmit the beam report.

The information regarding the plurality of beams that can be simultaneously received may include information indicating at least one of the following:
(1) whether or not simultaneous reception is possible for the reported instance (CSI report),
(2) whether or not simultaneous reception is possible for a certain group index,
(3) whether or not simultaneous reception is possible for a certain beam index, and
(4) Combination of beams/RS indices capable of simultaneous reception.

For the above (1), for example, it may be reported that the UE can simultaneously receive all beam indices of all groups reported in the CSI report by the CSI report indicating "possible".

For the above (2), for example, it may be reported that the UE can simultaneously receive all beam indices of the group index i of the CSI report by the CSI report indicating that "the group index i can be simultaneously received (for example, i is an integer).

For the above (2), information indicating that n beam indices corresponding to a group of a certain group index can be simultaneously received may be used. The n beam indices may correspond to, for example, beam indices corresponding to the higher (or lower) n measurement results in the reported group report. For example, it may be reported that the UE can simultaneously receive the beam indices corresponding to the higher n measurement results of the group index i of the CSI report by the CSI report indicating "the higher n beams can be simultaneously received for the group index i".

For the above (3), for example, it may be reported that the UE can simultaneously receive the beam index k (for example, k is an integer) of the CSI report by the CSI report indicating that the beam index k can be simultaneously received (and other beam index in which "simultaneously receivable" is indicated).

The above (4) may be expressed by, for example, a bitmap having a bit corresponding to a beam/RS index that can be simultaneously received as a specific value (for example, '1').

The network may control simultaneous transmission of the plurality of beams to the UE on the basis of the information regarding the plurality of beams capable of being simultaneously received transmitted from the UE.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

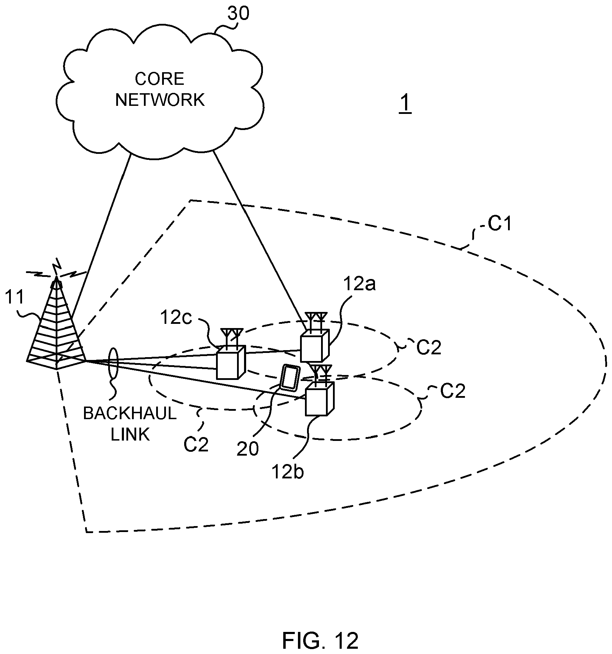

Fig. 12 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). Note that the frequency bands, definitions, and the like of the FR1 and FR2 are not limited thereto, and, for example, the FR1 may correspond to a frequency band higher than the FR2.

Further, the user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

Note that DCI that schedules PDSCH may be referred to as DL assignment, DL DCI, or the like, and DCI that schedules PUSCH may be referred to as UL grant, UL DCI, or the like. Note that PDSCH may be replaced with DL data, and PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. UE may monitor CORESET associated with a certain search space based on search space configuration.

One search space may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)."

### (Base Station)

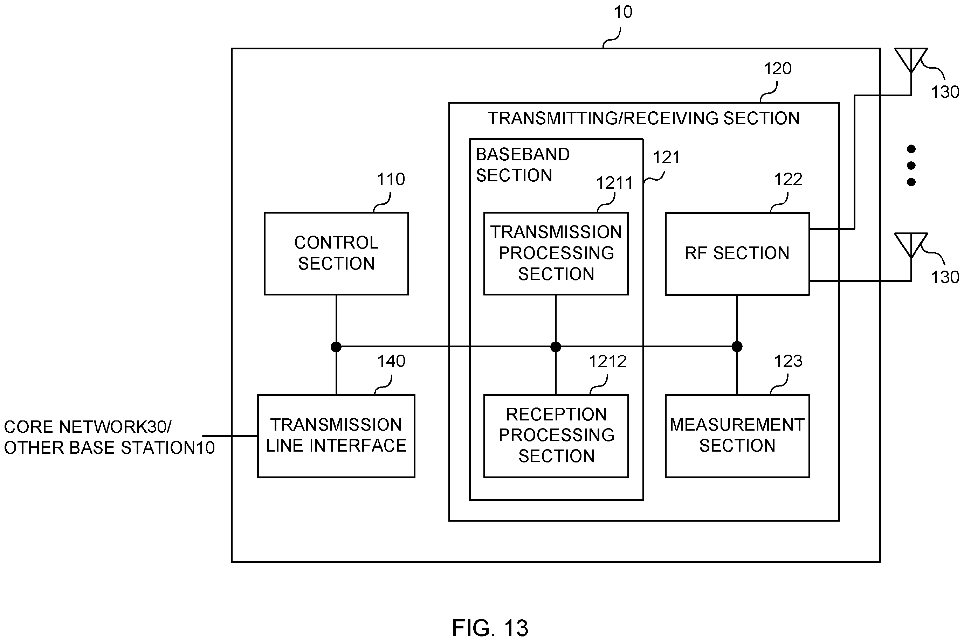

Fig. 13 is a diagram illustrating an example of a configuration of a base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 120 may be constituted as an integrated transmitting/receiving section, or may be constituted by a transmitting section and a receiving section. The transmitting section may include the transmission processing section 1211 and the RF section 122. The receiving section may be constituted by the reception processing section 1212, the RF section 122, and the measurement section 123.

The transmission/reception antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that, the transmitting section and the receiving section of the base station 10 in the present disclosure may include at least one of the transmitting/receiving section 120, the transmission/reception antenna 130, and the transmission line interface 140.

Note that the transmitting/receiving section 120 may receive the CSI report including channel state information (CSI) (in other words, one or more group reports including one or more measurement results in units of groups) for each group from the user terminal 20.

The control section 110 may determine whether or not the user terminal 20 can simultaneously receive resources in a certain group on the basis of the CSI report.

### (User Terminal)

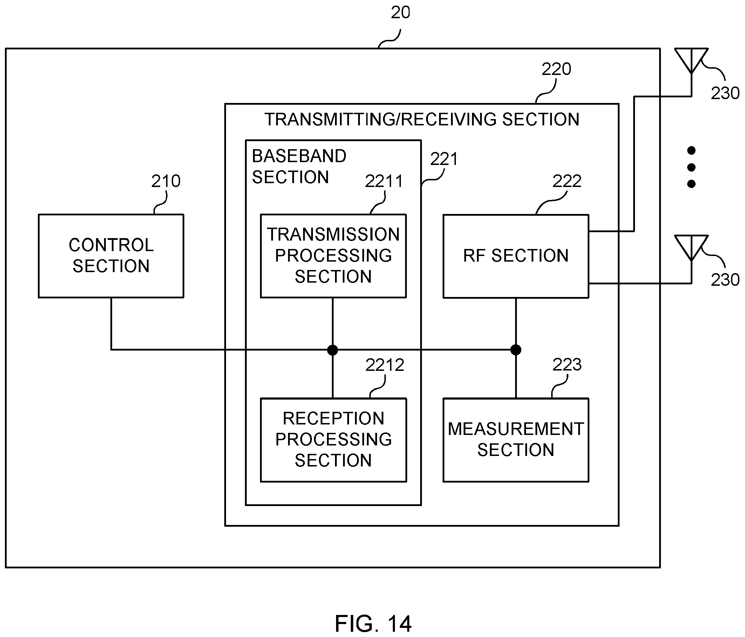

Fig. 14 is a diagram illustrating an example of a configuration of a user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may be configured by the reception processing section 2212, the RF section 222, and the measurement section 223.

The transmission/reception antenna 230 can include an antenna that is described on the basis of common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (for example, PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmission/reception antenna 230.

Note that the transmitting/receiving section 220 may transmit a channel state information (CSI) report including CSI (in other words, one or more group reports including one or more measurement results in units of groups) for each group.

The control section 210 may determine whether or not resources in a certain group can be simultaneously received.

The control section 210 may determine that the resources in the group cannot be simultaneously received and resources corresponding to different groups can be simultaneously received.

The control section 210 may determine that the resources in the group can be simultaneously received and resources corresponding to different groups cannot be simultaneously received.

The control section 210 may determine that a plurality of resource information for channel measurement (for example, the RRC information element "resourcesForChannelMeasurement") included in the configured CSI report configuration information (for example, the RRC information element "CSI-ReportConfig") corresponds to different groups.

### (Hardware Configuration)

Note that the block diagrams that have been used to describe the above embodiments illustrate blocks in functional units. These functional blocks (components) may be implemented in arbitrary combinations of at least one of hardware and software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be achieved by combining the one device or the plurality of devices with software.

Here, the function includes, but is not limited to, determining, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

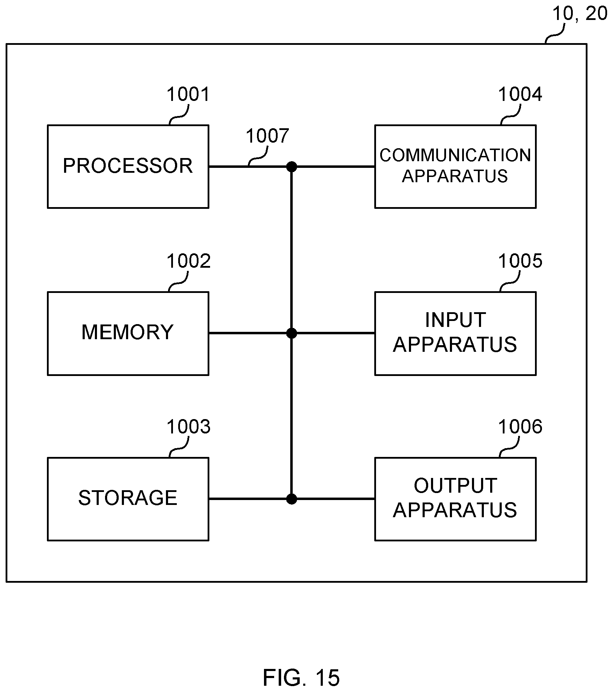

For example, the base station, the user terminal, or the like according to one embodiment of the present disclosure may function as a computer that executes the processing of the radio communication method in the present disclosure. Fig. 15 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented with one or more chips.

Each of functions of the base station 10 and the user terminal 20 is, for example, implemented by causing predetermined software (program) to be read on hardware such as the processor 1001 or the memory 1002 to thereby cause the processor 1001 to perform operation, control communication via the communication apparatus 1004, and control at least one of reading and writing of data from or in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program code), software modules, data, and so on from at least one of the storage 1003 and the communication apparatus 1004 into the memory 1002, and executes various types of processing according to these. As the program, a program that causes a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may include, for example, at least one of a read only memory (ROM), an erasable programmable ROM (EPROM), an electrically EPROM (EEPROM), a random access memory (RAM), and other appropriate storage media. The memory 1002 may be referred to as a register, a cache, a main memory (primary storage apparatus), and the like. The memory 1002 may store a program (program code), a software module, and the like executable for implementing the radio communication method according to an embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus."

The communication apparatus 1004 is hardware (transmitting/receiving device) for performing inter-computer communication via at least one of a wired network and a wireless network, and for example, is referred to as network device, network controller, network card, communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130 (230), and the like described above may be implemented by the communication apparatus 1004. The transmitting/receiving section 120 (220) may be implemented by physically or logically separating the transmitting section 120a (220a) and the receiving section 120b (220b) from each other.

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may be formed with one or more durations (frames) in the time domain. Each of the one or more periods (frames) included in the radio frame may be referred to as a subframe. Further, the subframe may include one or more slots in the time domain. A subframe may be a fixed time duration (for example, 1 ms) that is not dependent on numerology.

Here, the numerology may be a communication parameter used for at least one of transmission and reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, or the like.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

A slot may include a plurality of mini slots. Each mini slot may include one or more symbols in the time domain. Further, the mini slot may be referred to as a sub slot. Each mini slot may include fewer symbols than the slot. A PDSCH (or PUSCH) transmitted in a time unit larger than the mini slot may be referred to as PDSCH (PUSCH) mapping type A. A PDSCH (or PUSCH) transmitted using the mini slot may be referred to as PDSCH (PUSCH) mapping type B.

A radio frame, a subframe, a slot, a mini slot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and the TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot" and so on, instead of a "subframe."

Here, a TTI refers to the minimum time unit of scheduling in radio communication, for example. For example, in the LTE system, a base station performs scheduling to allocate radio resources (frequency bandwidth, transmission power, and the like that can be used in each user terminal) to each user terminal in TTI units. Note that the definition of TTIs is not limited to this.

The TTI may be the transmission time unit of channel-encoded data packets (transport blocks), code blocks, codewords, and so on, or may be the unit of processing in scheduling, link adaptation, and so on. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI," one or more TTIs (that is, one or multiple slots or one or more mini slots) may be the minimum time unit of scheduling. Also, the number of slots (the number of mini slots) to constitute this minimum time unit of scheduling may be controlled.

TTI having a period of 1 ms may be referred to as usual TTI (TTI in 3GPP Rel. 8 to 12), normal TTI, long TTI, a usual subframe, a normal subframe, a long subframe, a slot, or the like. A TTI that is shorter than the usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on numerology.

Also, an RB may include one or more symbols in the time domain, and may be one slot, one mini slot, one subframe or one TTI in length. One TTI, one subframe, and the like may be each formed with one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE may not assume to transmit or receive a predetermined channel/signal outside the active BWP. Note that, a "cell", a "carrier", and the like in the present disclosure may be replaced with a BWP.

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, the information and parameters described in the present disclosure may be represented in absolute values, represented in relative values with respect to given values, or represented using other corresponding information. For example, a radio resource may be specified by a predetermined index.

The names used for parameters and so on in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented using any of various different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and so on that are input may be transmitted to other pieces of apparatus.

Notification of information may be performed not only using the aspects/embodiments described in the present disclosure but also using another method. For example, the notification of information in the present disclosure may be performed using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, reporting of predetermined information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of a base station and a base station subsystem that performs a communication service in this coverage.

In the present disclosure, the terms such as "mobile station (MS)", "user terminal", "user equipment (UE)", and "terminal" can be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and the mobile station may be referred to as a transmitting apparatus, a receiving apparatus, a radio communication apparatus, and the like. Note that at least one of the base station and the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel and a downlink channel may be replaced with a side channel.

Likewise, the user terminal in the present disclosure may be replaced with a base station. In this case, the base station 10 may be configured to have the functions of the user terminal 20 described above.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

Each aspect/embodiment described in the present disclosure may be used alone, used in a combination, and switched in association with execution. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, but are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like) .

The term "on the basis of" used in the present disclosure does not mean "only on the basis of" unless otherwise specified. In other words, the phrase "based on" means both "based only on" and "based at least on."

Reference to elements with designations such as "first", "second", and so on as used in the present disclosure does not generally limit the number/quantity or order of these elements. These designations can be used in the present disclosure, as a convenient way of distinguishing between two or more elements. In this way, reference to the first and second elements does not imply that only two elements may be employed, or that the first element must precede the second element in some way.

The terms "judging (determining)" as used in the present disclosure may encompass a wide variety of operations. For example, "judging (determining)" may be interpreted to mean making judgements and determinations related to judging, calculating, computing, processing, deriving, investigating, looking up, search, inquiry (for example, looking up in a table, database, or another data structure), ascertaining, and so on.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, to "judge (determine)" may be replaced with "assuming", "expecting", "considering", and so on.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other." Note that the phrase may mean that "A and B are different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Consequently, the description of the present disclosure is provided only for the purpose of explaining examples, and should by no means be construed to limit the invention according to the present disclosure in any way.

## Claims

1. A terminal comprising:
a transmitting section that transmits a channel state information (CSI) report including CSI for each group; and
a control section that determines whether or not resources in a group can be simultaneously received.

2. The terminal according to claim 1, wherein the control section determines that resources in the group cannot be simultaneously received and resources corresponding to different groups can be simultaneously received.

3. The terminal according to claim 1, wherein the control section determines that resources in the group can be simultaneously received and resources corresponding to different groups cannot be simultaneously received.

4. The terminal according to any one of claims 1 to 3, wherein the control section determines that a plurality of resource information for channel measurement included in configured CSI report configuration information correspond to different groups.

5. A radio communication method of a terminal, comprising:
transmitting a channel state information (CSI) report including CSI for each group; and
determining whether or not resources in a group can be simultaneously received.

6. A base station comprising:
a receiving section that receives a channel state information (CSI) report including CSI for each group from a terminal; and
a control section that determines whether or not the terminal can simultaneously receive resources in a group, on the basis of the CSI report.
